**Europäisches Patentamt**

**European Patent Office**

**Office européen des brevets**

(19)

(11) Publication number : **0 484 008 A2**

(12) **EUROPEAN PATENT APPLICATION**

(21) Application number : **91309556.8**

(22) Date of filing : **17.10.91**

(51) Int. Cl.⁵ : **G06F 12/10**

(30) Priority : **20.10.90 JP 282444/90**

(43) Date of publication of application :
**06.05.92 Bulletin 92/19**

(84) Designated Contracting States :
**DE FR GB**

(71) Applicant : **FUJITSU LIMITED**
**1015, Kamikodanaka Nakahara-ku**
**Kawasaki-shi Kanagawa 211 (JP)**

(72) Inventor : **Osone, Hideki**
**c/o Fujitsu Limited, 1015, Kamikodanaka**
**Nakahara-ku, Kawasaki-shi, Kanagawa 211**
**(JP)**

(74) Representative : **Billington, Lawrence Emlyn et**
**al**
**HASELTINE LAKE & CO Hazlitt House 28**
**Southampton Buildings Chancery Lane**
**London WC2A 1AT (GB)**

(54) **Information processing unit having translation buffer.**

(57)  This information processing unit operates a predetermined operation among three values of a virtual address, a segment table origin address for use in the translation of the virtual address, and a virtual machine identifier, or between two values of the above three values, and reads a TLB in accordance with the operated result as an index address ; or operates a predetermined operation among three values of an access list entry number, an access list designation source origin used in the translation of the access list entry number, and a virtual machine identifier, or between two values of the above three values, and reads an ALB in accordance with the operated result as an index address. By using this unit a thrashing of the translation buffer can be prevented.

Fig. 7

TLB BUFFER

V I R : VIRTUAL ADDRESS
REAL : REAL ADDRESS

VIRTUAL MACHINE IDENTIFIER
SEGMENT TABLE ORIGIN
VIRTUAL ADDRESS
OPERATION
INDEX ADDRESS

## BACKGROUND OF THE INVENTION

### 1. Field of the Invention

The present invention relates to an improvement of an information processing unit having a translation buffer including a TLB, an ALB or the like.

### 2. Description of the Related Art

Since it takes a long time to execute a translation from a virtual address to a real address in each access, preceding translated results are stored in buffers, and whenever the address translation is necessary, the buffer is read. If the translated result of the same virtual address is stored, by use of the result, a high speed translation is obtained. This is well known technology. The buffer is generally called a TLB (Translation Lookaside Buffer).

The TLB is usually constituted by a RAM (Random Access Memory). When there is one way, a direct mapping method is used and when there is more than one way, a set-associative method is used. The address of RAM uses a portion of a virtual address or an operated value of the whole or a portion of a virtual address. The read of RAM by the operated value is generally called hashing.

Next, an access register translation is explained. In an information processing unit using a plurality of virtual address space, to designate a segment table for translation from a virtual address to a real address, an access register translation is executed. The detail of the access register translation is described in the manual of International Business Machines Corporation," IBM Enterprise System Architecture/370 (SA22-7200-0)" and "NIKKEI COMPUTER 1988, September 12".

Similar to the TLB, since it takes a long time to execute an access register translation in each access, the preceding translated results are stored in buffers, and whenever the access register translation is necessary, the buffers are read. If the translated results of the same access entry number is stored, by using the stored result, a high speed translation can be executed. This is described in the above manual. These buffers are generally called ALB (Access Register Translation Lookaside Buffer).

This invention relates to an improvement of the information processing unit having a TLB, an ALB, or the like. The details of the related arts concerning the TLB and ALB are explained hereinafter in the DESCRIPTION OF THE PREFERRED EMBODIMENTS with reference to drawings.

In the conventional constitution of the TLB, since the index address is only the virtual address and in the conventional constitution of the ALB, since the index address is only an access list entry number, the RAM sometimes used is one-sided, and as a result, the hit ratio of the TLB or ALB is reduced.

For example, when the virtual address that has the same value in a plurality of different address spaces (having different segment table origin address) is frequently accessed, the storage of the translated result to the TLB sometimes cannot be carried out as a whole simultaneously by collected access to one special line. In this case, the translated result excluded from the TLB must be translated again when the translation becomes necessary and the other translated result, currently stored in the TLB, is excluded and the necessary translated data is stored. The frequent occurrence of this operation is called thrashing and the occurrence of thrashing causes low performance. The present invention is carried out with this problem in mind.

Further, the related arts to the ALB are described in Japanese Patent Publication (Kokai) 3-57046 (March 12, 1991). The Serial Number of the corresponding U.S. Application is No.557,707 and the application is filed on July 25, 1990.

## SUMMARY OF THE INVENTION

An object of the present invention is to prevent thrashing and increase the hit ratio in a TLB or an ALB.

According to a first aspect of the present invention, there is provided an information processing unit including a TLB using a direct mapping method or a set-associative method having a plurality of TLB entries having a pair of at least a virtual address and a real address or an absolute address, which is a translated result of the virtual address, to translate the address from the virtual address to the real address or the absolute address, characterized in that the unit comprises a translation buffer for operating predetermined operations among three values of a virtual address, a segment table origin address used in the translation of the virtual address and a virtual machine identifier, or between selected two values from the above three values, for reading the TLB by an index address obtained by the operating result.

According to a second aspect of the present invention, there is provided an information processing unit including an ALB using a direct mapping method or a set-associative method, having a plurality of ALB entries having a pair of at least an access list entry number and a segment table designation, which is a translated result of the access list entry number, to translate an access register from the access list entry number to the segment table designation, characterized in that the unit comprises a translation buffer for operating predetermined operations among three values of an access list entry number, an access list designation source origin used in the translation of the access list entry number, and a virtual machine identifier, or between selected two values from the above three values, for reading the ALB by an index address obtained by the operating result.

Other features and advantages of the invention will be apparent from the following description given with reference to the accompanying drawings.

BRIEF DESCRIPTION OF THE DRAWINGS

Figure 1 shows address translation processes from virtual address to real address;

Fig. 2 shows a conventional TLB structure;

Fig. 3 shows logical operations in an operation circuit in Fig. 2;

Fig. 4 shows access register translation processes;

Fig. 5 shows a conventional ALB structure;

Fig. 6 shows logical operations in an operation circuit in Fig. 5;

Fig. 7 shows a summarized TLB for explaining the first aspect of the present invention;

Fig. 8 shows an embodiment of the TLB in the first aspect of the present invention;

Fig. 9 shows logical operations in the operation circuit in Fig. 8;

Figs. 10A to 10H are logical circuit diagrams corresponding to Fig. 9;

Fig. 11 shows a summarized ALB for explaining the second aspect of the present invention;

Fig. 12 shows an embodiment of the ALB in the second aspect of the present invention;

Fig. 13 shows logical operations in the operation circuit in Fig. 12;

Figs. 14A to 14H are logical circuit diagrams corresponding to Fig. 13; and

Fig. 15 is a block diagram showing a situation of the TLB and the ALB in a CPU in the information processing unit.

DESCRIPTION OF THE PREFERRED EMBODIMENTS

Prior to the explanation of embodiments, the related art concerning this invention is explained with reference to drawings.

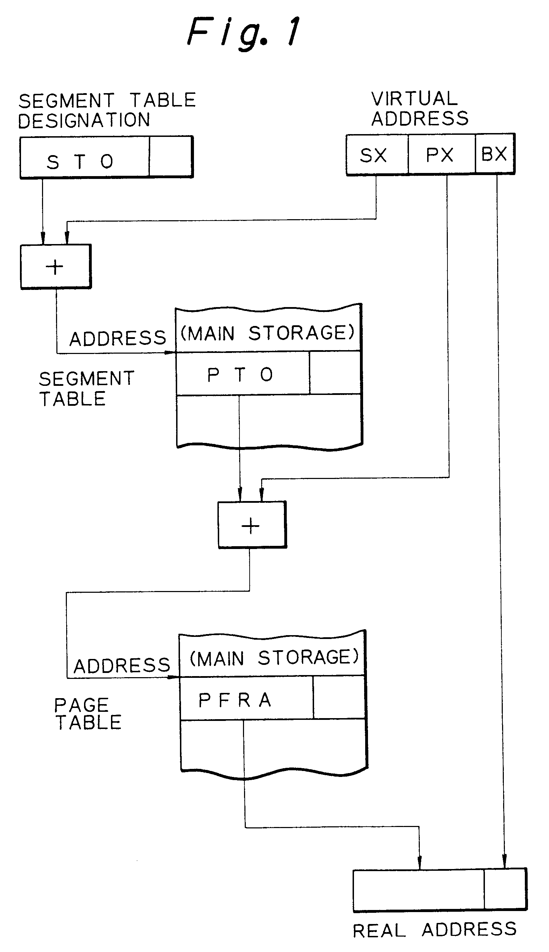

Figure 1 is a diagram showing a translation process to translate a virtual address to a real address. In the figure, STO denotes a segment table origin address, PTO denotes a page table origin address, PFRA denotes a page frame real address, SX denotes a segment index, PX denotes a page index, and BX denotes a byte index.

When the virtual address is translated to the real address, first the segment table origin address STO is designated. The segment table origin address STO is added to the segment index SX of the virtual address, then, from the additional result, the corresponding entry of the segment table is accessed. In the entry, the page table origin address PTO is stored. The read page table origin address PTO is added to the page index PX of the virtual address, and from the additional result, the corresponding entry of the page table is read. In this entry, the page frame real address PFRA is stored. By the concatenation of the read page frame real address PFRA and the byte index BX of the virtual address, the real address corresponding to the virtual address is obtained. In addition, the segment table and the page table are included in the main storage.

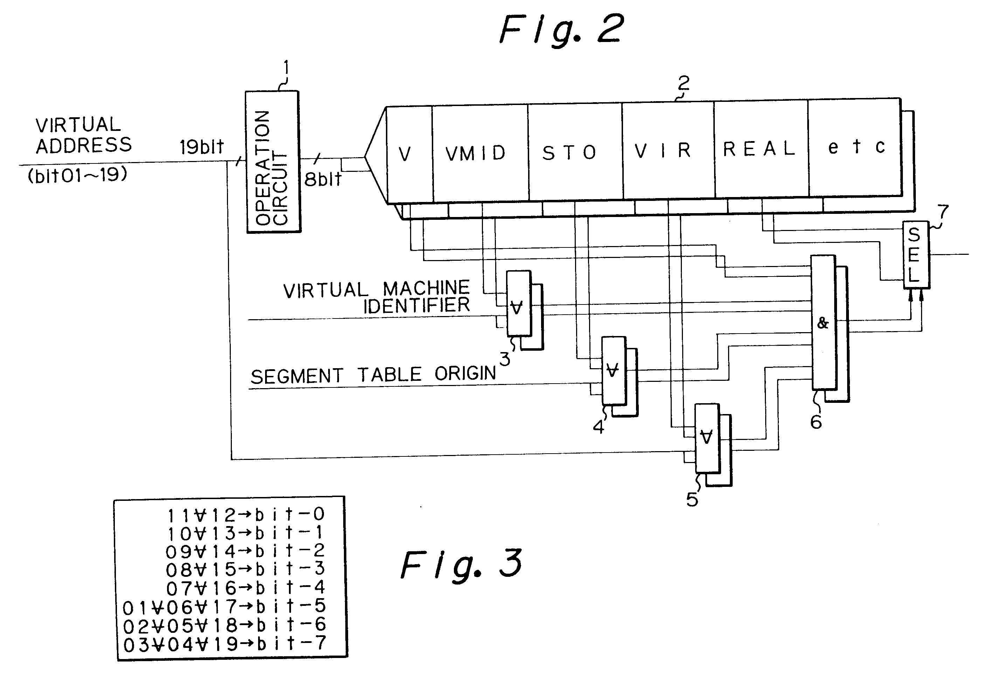

In Fig. 2, the constitution of the conventional TLB is shown. In the figure, 1 denotes an operation circuit, 2 denotes a RAM of the TLB, 3 to 5 denote comparison circuits, 6 denotes a AND circuit, 7 denotes a selector, V denotes a bit showing a validity, VMID denotes a virtual machine identifier, STO denotes a segment table origin, VIR denotes a virtual address, REAL denotes a real address, and etc., denotes the other fields.

The operation of the TLB in Fig. 2 is explained below. First, the virtual address (bits 01 to 19) is applied to the operation circuit 1. The operation circuit 1 executes operations shown in Fig. 3 and outputs an index address of eight bits. In this place, a mark $\triangledown$ denotes an EOR (exclusive-OR) circuit. The RAM 2 is accessed in accordance with the index address and the corresponding TLB entry is read from the RAM 2. The TLB entry consists of the validity bit V, the virtual machine identifier VMID, the segment table origin STO, the virtual address VIR, the real address REAL, and other fields. The virtual machine identifier VMID of the read TLB entry is compared with the virtual machine identifier from an external by the comparison circuit 3, the segment table origin STO of the read TLB entry is compared with the segment table origin from an external by the comparison circuit 4, and the virtual address VIR of the read TLB entry is compared with the virtual address from an external by the comparison circuit 5. The validity bit of the read TLB entry and the compared results from the comparison circuits 3 to 5 are supplied to the AND circuit 6. In addition, each of the portions shown by the reference numerals 2, 3, 4, 5, and 6 exists in double, respectively. The outputs of the two AND circuits 6 are supplied to the selector 7. The selector 7 selects a real address REAL, which is read from the RAM 2 corresponding to the AND circuit 6 showing logical "1", and outputs the same.

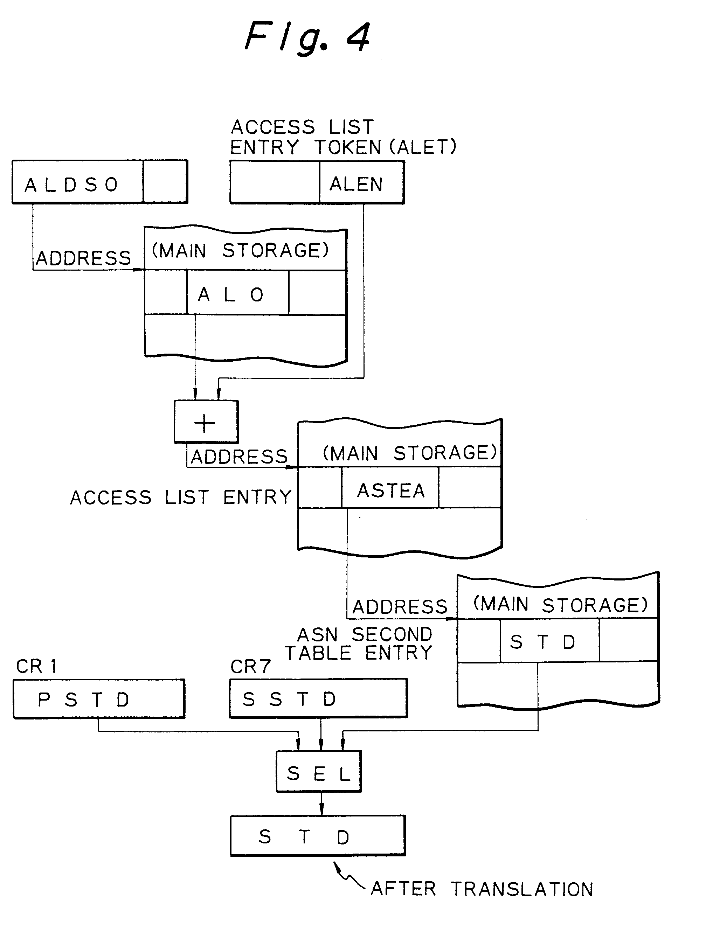

Figure 4 shows an access register translation. In the figure, ALDSO denotes an access list designation source origin, ALET denotes an access list entry token, ALO denotes an access list origin, ALEN denotes an access list entry number, ASTEA denotes an ASN second table entry address, STD denotes a segment table designation, PSTD denotes a primary segment table designation, and SSTD denotes a secondary segment table designation.

First, the access list designation source origin ALDSO is designated, the main storage is accessed in accordance with the access list designation source origin ALDSO, and the access list origin ALO is read. Moreover, the access list entry token ALET designated in the access register is read. In the access list entry token ALET, the access list entry number ALEN is included. The read access list origin ALO is added to the read access list entry number ALEN, and the corresponding entry of the access list is accessed in accordance with the additional result. In the access list entry, the ASN second table entry address ASTEA is included. The corresponding entry of the ASN second table is read in accordance with the read ASN second table entry address ASTEA. In the ASN second table entry, the segment table designation STD is included.

In a control register CR1, the primary segment table designation PSTD is stored and in a control register CR7, the secondary segment table designation SSTD is stored.

When the contents of the access list entry token ALET are zero, the primary segment table designation PSTD of the control register CR1 is selected, when the low order end bit of the access list entry token ALET is "1" and the other bits are "0", the secondary segment table designation SSTD of the control register CR7 is selected, and in cases except for the above, the segment table designation STD of the ASN second table entry is selected.

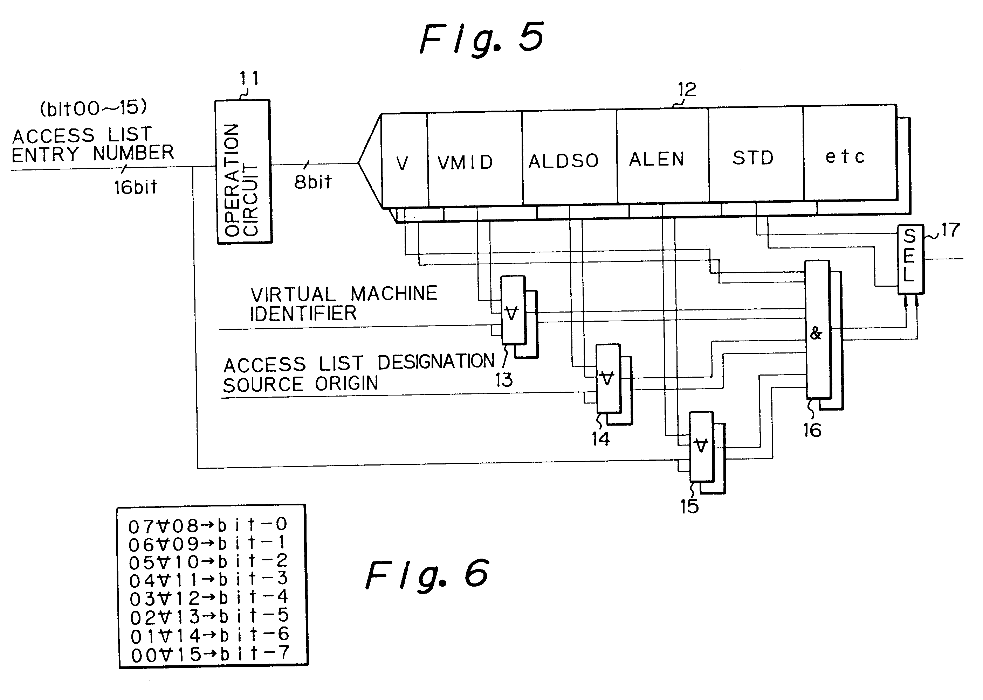

Figure 5 shows a constitution of the conventional ALB. In the figure, 11 denotes an operation circuit, 12 denotes a RAM of the ALB, 13 to 15 denote comparison circuits, 16 denotes an AND circuit, and 17 denotes a selector.

The operation of the ALB in Fig. 5 is explained below. An access list entry number (bits 00 to 15) is supplied to the operation circuit 11. The operation circuit 11 operates as shown in Fig. 6, and an index address of 8 bits is output. The RAM 12 is accessed in accordance with the index address, and the corresponding ALB entry is read from the RAM 12. The ALB entry consists of a validity bit V, a virtual machine identifier VMID, an access list designation source origin ALDSO, an access list entry number ALEN, a segment table designation STD, and other fields, etc. The virtual machine identifier VMID of the read ALB entry is compared with the virtual machine identifier from an external by the comparison circuit 13, the access list designation source origin ALDSO of the read ALB entry is compared with the access list designation source origin from an external by the comparison circuit 14, and the access list entry number ALEN of the read ALB entry is compared with the access list entry number from an external by the comparison circuit 15. The validity bit V of the read ALB entry and the compared result in the identity circuits 13 to 15 are supplied to the AND circuit 16. In addition, each of the portions having reference numerals 12, 13, 14, 15, and 16 exist in double, respectively. The outputs of the two AND circuits 16 is supplied to the selector 17. The selector 17 selects the segment table designation STD that is read from the RAM 12 corresponding to the AND circuit 16 designating logical "1".

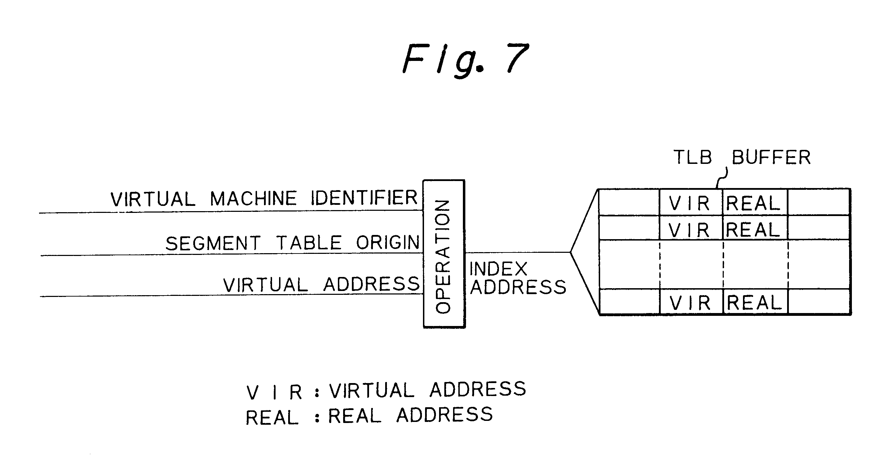

A first aspect of the present invention is summarizedly explained with reference to Fig. 7.

The TLB has a plurality of TLB entries each having at least a pair of virtual addresses and real addresses (or absolute addresses). A virtual machine identifier, a segment table origin address, and a virtual address are supplied to an operation circuit, and the operation circuit forms an index address in accordance with the above input data. The data of a TLB entry determined by the index address and output from the operation circuit is read from the TLB.

The TLB having a pair of virtual addresses and absolute addresses in the TLB entry is known. This invention can be applied to the above known TLB. In this place, the absolute address is prefixed to the real address. Also, the index address can be formed by using two input data of three input data, which are the virtual machine identifier, the segment table origin address and the virtual address.

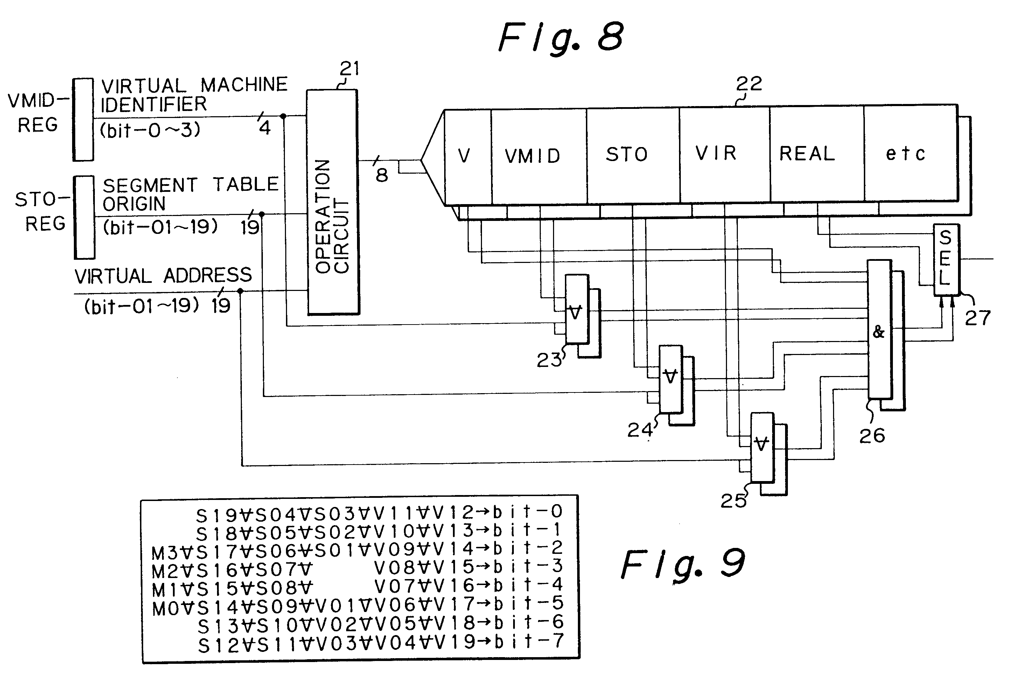

An embodiment according to a first aspect of the present invention is explained with reference to Fig. 8. In the figure, 21 denotes an operation circuit, 22 denotes a RAM of the TLB, 23 to 25 denote comparison circuits, 26 denotes an AND circuit, and 27 denotes a selector.

To the operation circuit 21, the virtual machine identifier (bits 0 to 3), the segment table origin (bits 01 to 19), and the virtual address (bits 01 to 19) are supplied. In this place, the virtual machine identifier and the segment table origin are stored in a register (VMID-REG) and a register (STO-REG) in the information processing unit, respectively. Figure 9 shows an example of the operation executed in the operation circuit 21. Fig. 9, M0 to M3 shows each bit of the virtual machine identifier, S01 to S19 show each bit of the segment table origin, and V01 to V19 show each bit of the virtual address. The operation circuit 21 forms, for example, bit 0 of the index address in accordance with the following equation.

$$S19 \veebar S04 \veebar S03 \veebar V11 \veebar V12 \text{ (the}$$

mark $\veebar$ means exclusive-OR)

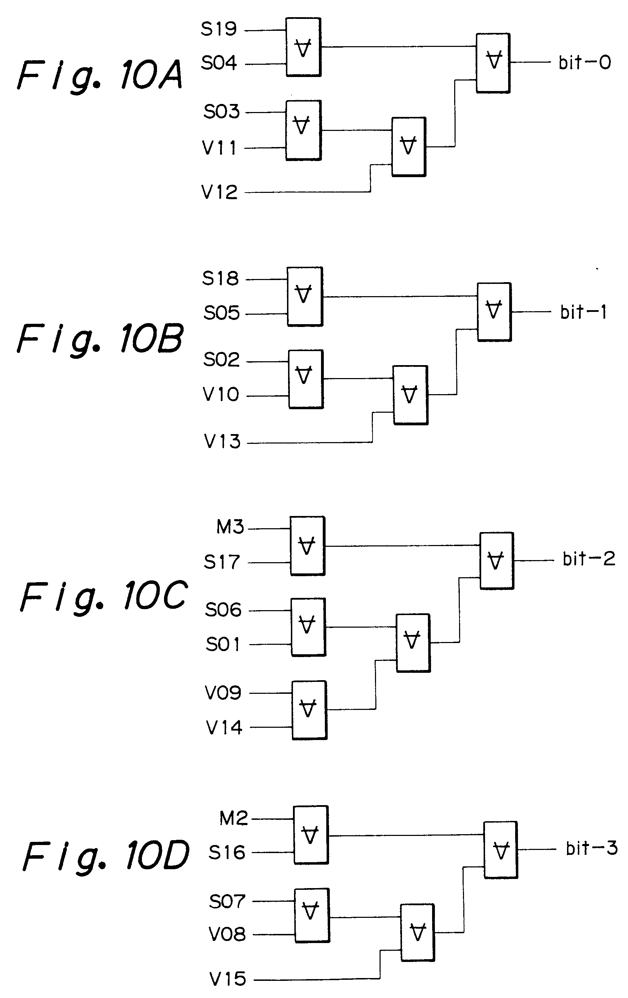

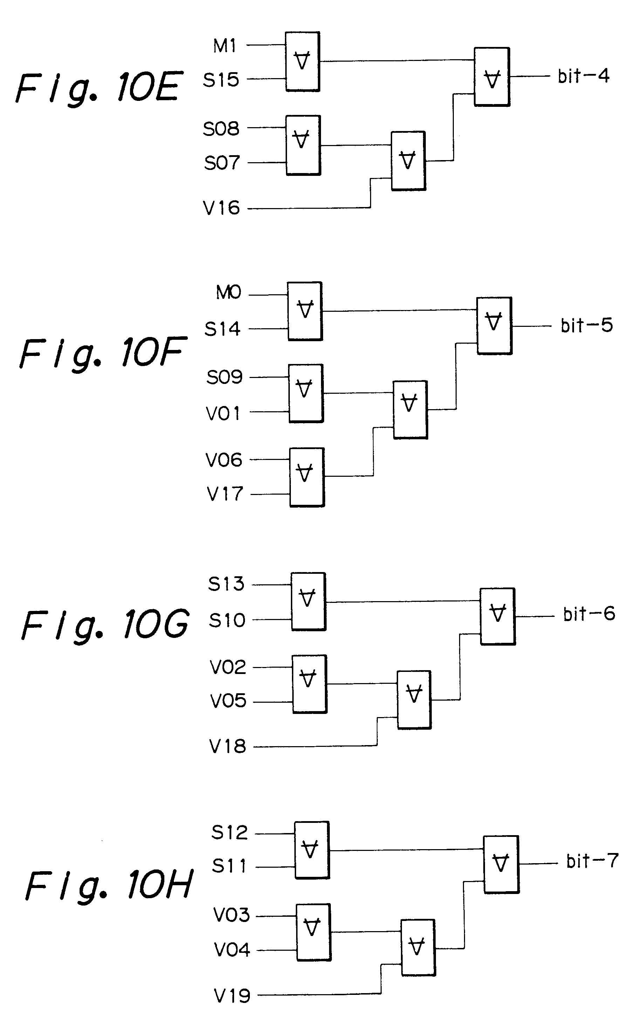

The circuit executing the above operation is shown in the circuit of Fig. 10A. The RAM 22 of the TLB is accessed by the index address formed by the operation circuit 21. The operations hereinafter are the same as that of the conventional TLB shown in Fig. 2. The read of RAM by the above operated value is called hashing operation.

By using the operation shown in Fig. 9, for example, the following advantages are obtained.

When translation pairs having an identical virtual address (V01 to V19 are equal) in a different address space (S01 to S19 are different) are stored in the TLB, in the conventional operation, the line addresses of the TLB are identical for these translations, therefore, simultaneously, many translations cannot be stored. On the other hand, in the operation in this invention, the line addresses of the TLB are usually different for these translation pairs, and therefore, simultaneously more translation pairs can be stored compared with the conventional TLB.

When the translation pairs having an identical virtual address (V01 to V19 are equal) in the different virtual machine identifier (M0 to M3 are different) are stored in the TLB, the above same advantages are obtained.

Generally in any address spaces or any address in the virtual machine, the virtual addresses that are included in a special scope are frequently utilized. In detail, the address in the value of low order is apt to be used frequently. In this case, if the operation according to this invention is executed, the whole TLB is used uniformly and the ratio of hit increases.

The logical circuits corresponding to the logical equations shown in Fig. 9 are shown in Figs. 10A to 10H.

Although in the above embodiment, the hashing operation is executed by using the virtual address, the segment table origin address, and the virtual machine identifier, two of the three above can also be used.

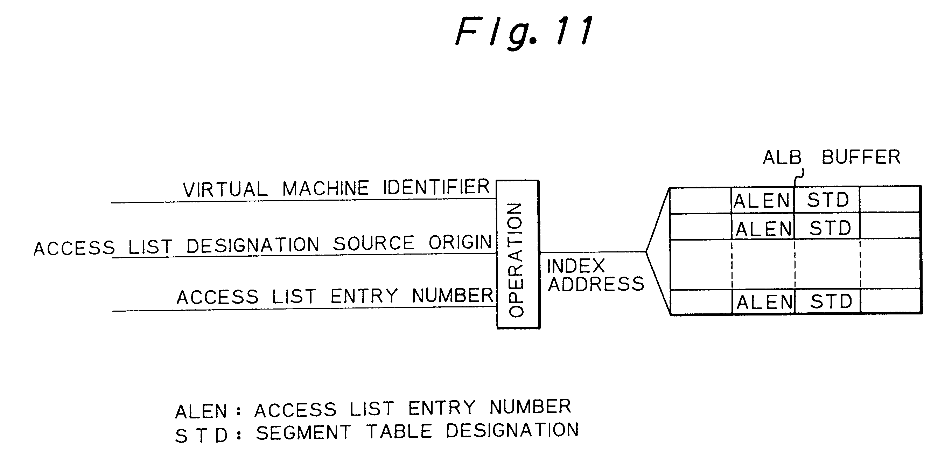

A second aspect of the present invention is explained and summarized with reference to Fig. 11.

The ALB comprises a plurality of ALB entries having at least a pair of access list entry numbers and a segment table designation that is a translated result. A virtual machine identifier, an access list designation source origin, and an access list entry number are supplied to an operation circuit, and the operation circuit forms an index address in accordance with the input data. The data of the ALB entry determined by the index address, output from the operation circuit, are read from the ALB.

The index address may be formed in accordance with the two input data of the three input data, i.e., the virtual machine identifier, the access list designation source origin, and the access list entry number.

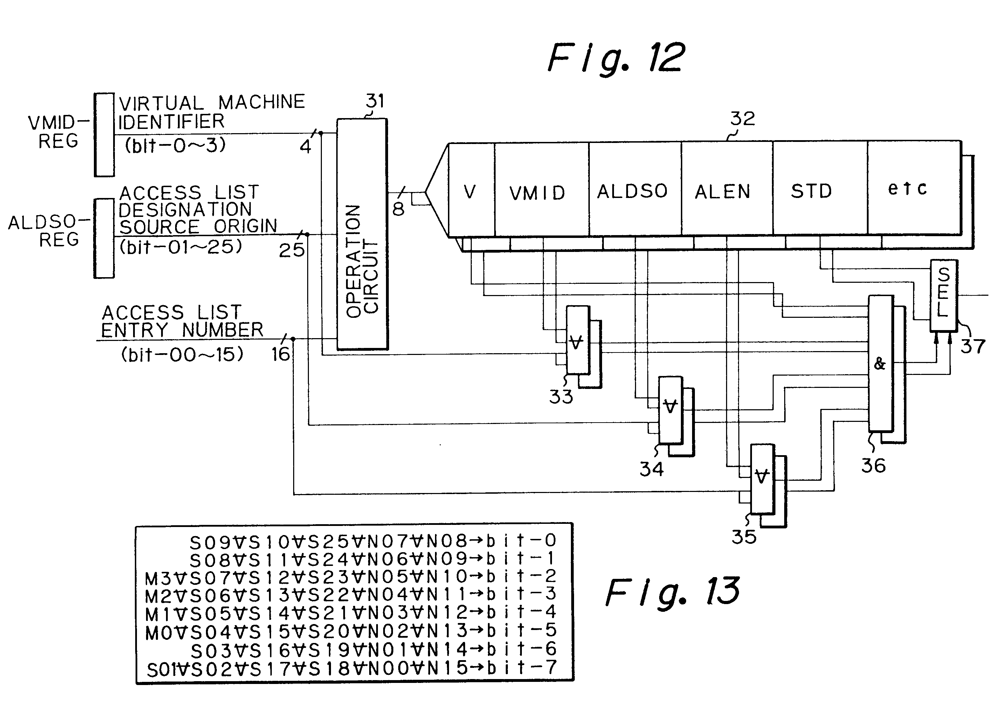

An embodiment of the second aspect of the present invention is explained with reference to Fig. 12.

In the figure, 31 denotes an operation circuit, 32 denotes a RAM of the ALB, 33 to 35 denote comparison circuits, 36 denotes an AND circuit, and 37 denotes a selector.

A virtual machine identifier (bits 0 to 3), an access list designation source origin (bits 01 to 25), and an access list entry number (bits 00 to 15) are supplied to the operation circuit 31. In this place, the virtual machine identifier and the access list designation source origin are stored in a register (VMID-REG) and a register (ALDSO-REG) in the information processing unit, respectively. In Fig. 13, an example of operations executed in the operation circuit 31 is shown. Fig. 13, M0 to M3 shows each bit of the virtual machine identifier, S01 to S25 show each bit of the access list designation source origin, and N00 to N15 show each bit of the access list entry number. The operation circuit 31 generates, for example, bit 0 of the index address in accordance with an equation:

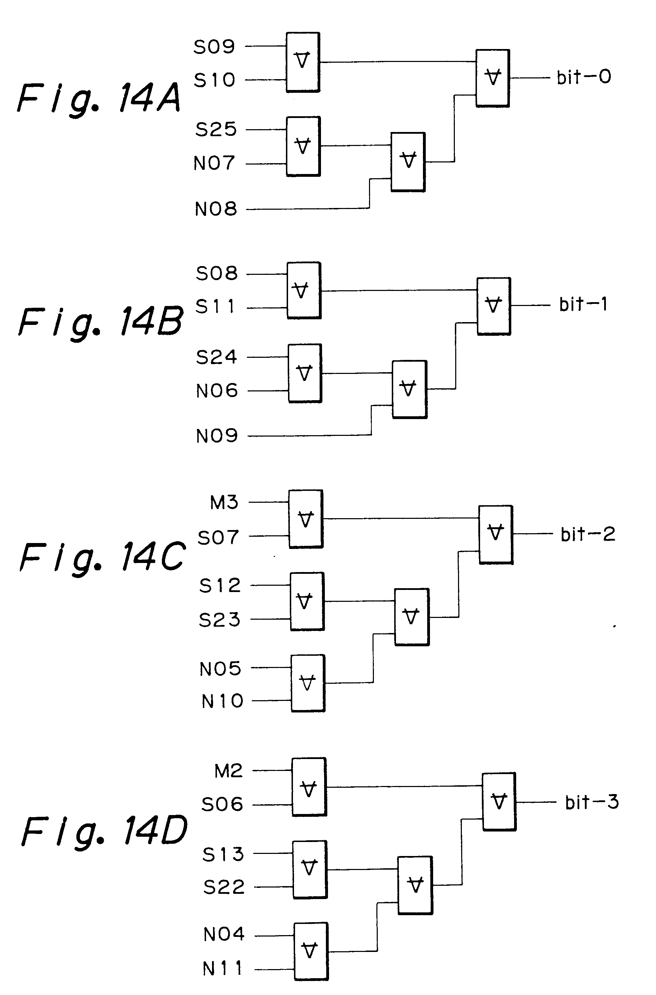

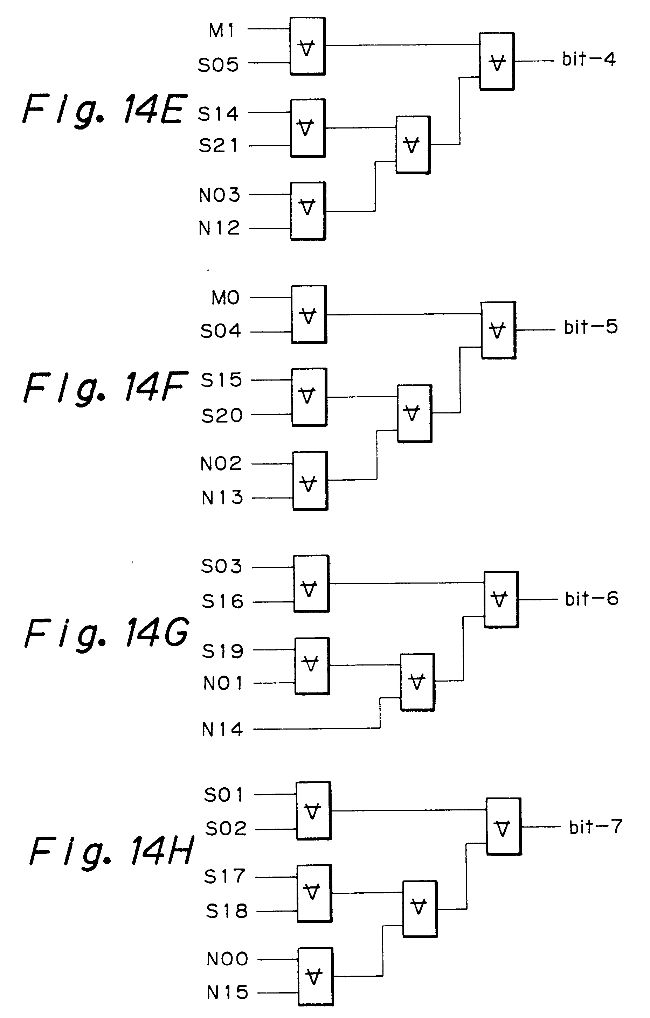

$$S09 \veebar S10 \veebar S25 \veebar N07 \veebar N08.$$ In this place the mark $\veebar$ designates an EOR (exclusive-OR) circuit. The RAM 32 of the ALB is accessed by the index address generated by the operation circuit 31. The operation hereinafter is the same as that of the conventional ALB in Fig. 5. The logical circuits executing the operation in Fig. 13 are shown in Figs. 14A to 14H. The read of RAM by the above operated value is called hashing operation.

If the operation in Fig. 13 is carried out, for example, the following advantages are obtained.

When translation pairs having an identical value of access list entry numbers (value of N00 to N15 is equal) in a different access list designation source origin (value of S02 to S25 is different) are stored in the ALB, the line addresses of the ALB are identical for these translation pairs in the conventional operation, and therefore, simultaneously, many translations cannot be stored. On the other hand, by using the operation of this invention, the line addresses of the ALB are usually different for these translation pairs, and therefore, more translation pairs can be stored in the ALB, than with the conventional operation.

When the translation pairs having an identical value of access list entry number (value of N00 to N15 is equal) in a different virtual machine identifier (value of M0 to M3 is different) are stored in the ALB, the same advantages can be obtained.

Generally, in any access list designation source origin, or under any virtual machine, a special scope of access list entry number is frequently used. In detail, the low order of the entry number is apt to be used frequently. In this case, if the operation according to this invention is applied, the whole ALB is used uniformly and the hit ratio of the ALB increases.

Although, in the above embodiment, the hashing operation is executed by using the access list entry number, the access list designation source origin, and the virtual machine identifier, two of the three above can also be used.

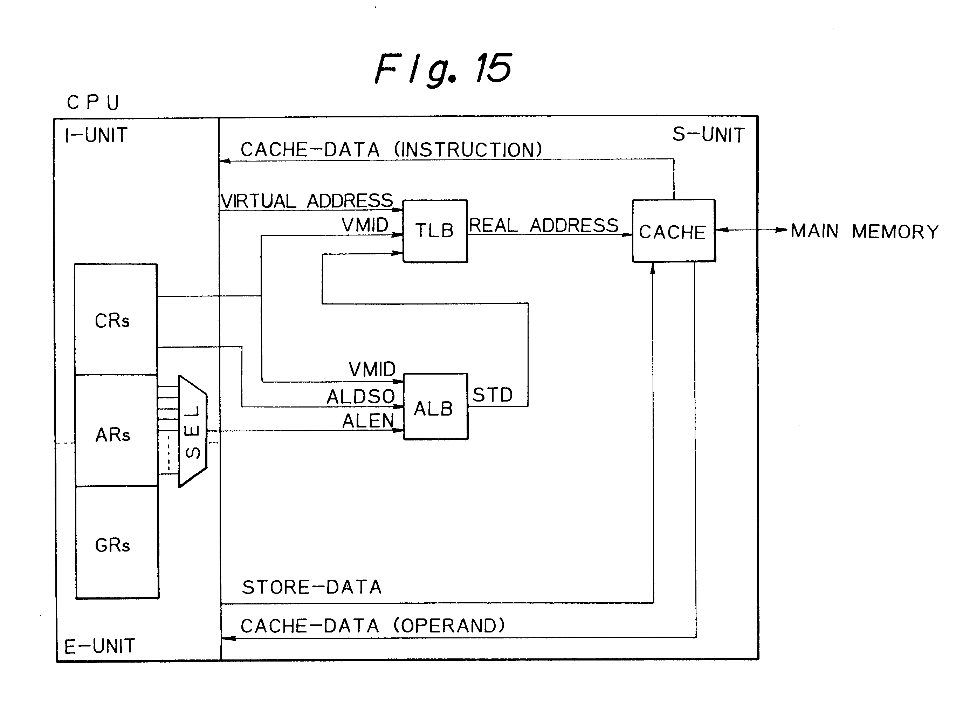

Figure 15 is a block diagram showing a situation of the TLB and the ALB in a central processing unit (CPU) in the information processing unit.

The CPU comprises an I-unit, an E-unit, and an S-unit. The I-unit controls the execution of the instruction. The E-unit entirely executes the calculation. The S-unit receives the request of the instruction read, the operand read or the operand write from the I-unit, and then after the access register translation and the address translation, the S-unit accesses a cache. For the request of the instruction read, the S-unit sends the read data to the I-unit; for the request of the operand read, the S-unit sends the read data to the E-unit; and for the request of the operand write, the S-unit writes the Store-Data from the E-unit into the cache. If necessary, the cache transmits the data to the main memory or receives the data from the main memory.

In the CPU, a general registers (GRs), an access registers (ARs), and a control registers (CRs) are provided as registers. They are read from or written to the I-unit and E-unit. One data is selected from the ARs, the selected output is sent to the S-unit as an access list entry number (ALEN). In addition, the virtual machine identifier (VMID) and the access list designation source origin (ALDSO) are stored in the CRs and they are sent to the S-unit.

## Claims

1. An information processing unit including a TLB using a direct mapping method or a set-associative method, having a plurality of TLB entries having a pair of at least a virtual address and a real address or an absolute address, which is a translated result of the virtual address, to translate the address from the virtual address to the real address or the absolute address, characterized in that the unit comprises a translation buffer for operating predetermined operations among three values of a virtual address, a segment table origin address used in the translation of the virtual address, and a virtual machine identifier, or between selected two values from the above three values, for reading the TLB by an index address obtained by the operating result.

2. An information processing unit as set forth in claim 1 wherein said translation buffer comprises an operation means (21) for operating said predetermined operations and the operation means includes logical operation circuits, and said TLB comprises a virtual machine identifier field (VMID), a segment table origin field (STO), a virtual address field (VIR) and a real address field (REAL).

3. An information processing unit as set forth in claim 2 wherein said operation means (21) comprises a plurality of exclusive OR circuits.

4. An information processing unit including an ALB using a direct mapping method or a set-associative method, having a plurality of ALB entries having a pair of at least an access list entry number and a segment table designation, which is a translated result of the access list entry number, to translate an access register from the access list entry number to the segment table designation, characterized in that the unit comprises a translation buffer for operating predetermined operations among three values of an access list entry number, an access list designation source origin used in the translation of the access list entry number, and a virtual machine identifier, or between selected two values from the above three values, for reading the ALB by an index address obtained by the operating result.

5. An information processing unit as set forth in claim 4, wherein said translation buffer comprises an operation means (31) for operating said predetermined operations and the operation means includes logical operation circuits, and said ALB comprises a virtual machine identifier field (VMID), an access list designation source origin field (ALDSO), an access list entry number field (ALEN), and a segment table designation field (STD).

6. An information processing unit as set forth in claim 5, wherein said operation means (31) comprises a plurality of exclusive OR circuits.

# Fig. 1

SEGMENT TABLE
DESIGNATION

| S T O | |
|---|---|

VIRTUAL
ADDRESS

| SX | PX | BX |
|---|---|---|

+

ADDRESS (MAIN STORAGE)

SEGMENT
TABLE

| P T O | |
|---|---|
| | |

+

ADDRESS (MAIN STORAGE)

PAGE
TABLE

| P F R A | |
|---|---|
| | |

| | |
|---|---|

REAL ADDRESS

# Fig. 2

VIRTUAL ADDRESS (bit01~19) 19bit → OPERATION CIRCUIT (1) 8bit → | V | VMID | STO | VIR | REAL | etc | (2)

VIRTUAL MACHINE IDENTIFIER

SEGMENT TABLE ORIGIN

3, 4, 5 — ∀

6 — &

7 — SEL

# Fig. 3

```
11∀12→bit-0
10∀13→bit-1
09∀14→bit-2
08∀15→bit-3
07∀16→bit-4
01∀06∀17→bit-5
02∀05∀18→bit-6
03∀04∀19→bit-7
```

# Fig. 4

ACCESS LIST
ENTRY TOKEN (ALET)

| A L D S O | |

| | ALEN |

ADDRESS → (MAIN STORAGE)

| | A L O | |

$+$

ADDRESS → (MAIN STORAGE)

ACCESS LIST ENTRY

| | ASTEA | |

ADDRESS (MAIN STORAGE)

ASN SECOND
TABLE ENTRY

| | S T D | |

CR 1

| P S T D |

CR7

| S S T D |

S E L

| S   T   D |

AFTER TRANSLATION

# Fig. 5

(bit00~15)
ACCESS LIST
ENTRY NUMBER
16bit

OPERATION CIRCUIT 11

8bit

| V | VMID | ALDSO | ALEN | STD | etc |

12

VIRTUAL MACHINE
IDENTIFIER

ACCESS LIST DESIGNATION
SOURCE ORIGIN

13

14

15

16

17
SEL

# Fig. 6

```
07∀08→bit-0
06∀09→bit-1
05∀10→bit-2
04∀11→bit-3
03∀12→bit-4
02∀13→bit-5
01∀14→bit-6
00∀15→bit-7
```

EP 0 484 008 A2

# Fig. 7

TLB  BUFFER

VIRTUAL  MACHINE  IDENTIFIER

SEGMENT  TABLE  ORIGIN

VIRTUAL  ADDRESS

OPERATION

INDEX
ADDRESS

| | VIR | REAL | |
|---|---|---|---|
| | VIR | REAL | |
| | | | |
| | VIR | REAL | |

V I R : VIRTUAL  ADDRESS
REAL : REAL  ADDRESS

# Fig. 8

VMID-REG — VIRTUAL MACHINE IDENTIFIER (bit-0~3) 4

STO-REG — SEGMENT TABLE ORIGIN (bit-01~19) 19

VIRTUAL ADDRESS (bit-01~19) 19

OPERATION CIRCUIT 21

8

22

| V | VMID | STO | VIR | REAL | etc |

23  24  25  26  27

&  SEL

EP 0 484 008 A2

# Fig. 9

```
S19∀S04∀S03∀V11∀V12→bit-0
 S18∀S05∀S02∀V10∀V13→bit-1
M3∀S17∀S06∀S01∀V09∀V14→bit-2
M2∀S16∀S07∀    V08∀V15→bit-3
M1∀S15∀S08∀    V07∀V16→bit-4
M0∀S14∀S09∀V01∀V06∀V17→bit-5
    S13∀S10∀V02∀V05∀V18→bit-6
    S12∀S11∀V03∀V04∀V19→bit-7
```

Fig. 10A

Fig. 10B

Fig. 10C

Fig. 10D

*Fig. 10E*

M1 ───┐
       ┤∀├──────────────┐
S15 ───┘                ├∀├─── bit-4
                        │
S08 ───┐                │
       ┤∀├───┐          │
S07 ───┘    ├∀├─────────┘
            │
V16 ────────┘

*Fig. 10F*

M0 ───┐
       ┤∀├──────────────┐
S14 ───┘                ├∀├─── bit-5
                        │
S09 ───┐                │
       ┤∀├───┐          │
V01 ───┘    ├∀├─────────┘
            │
V06 ───┐    │
       ┤∀├──┘
V17 ───┘

*Fig. 10G*

S13 ───┐
       ┤∀├──────────────┐
S10 ───┘                ├∀├─── bit-6
                        │
V02 ───┐                │
       ┤∀├───┐          │
V05 ───┘    ├∀├─────────┘
            │
V18 ────────┘

*Fig. 10H*

S12 ───┐
       ┤∀├──────────────┐
S11 ───┘                ├∀├─── bit-7
                        │
V03 ───┐                │
       ┤∀├───┐          │
V04 ───┘    ├∀├─────────┘
            │
V19 ────────┘

14

# Fig. 11

ALB BUFFER

VIRTUAL MACHINE IDENTIFIER

ACCESS LIST DESIGNATION SOURCE ORIGIN

ACCESS LIST ENTRY NUMBER

OPERATION

INDEX
ADDRESS

| | ALEN | STD | |
|---|---|---|---|
| | ALEN | STD | |
| | | | |
| | ALEN | STD | |

ALEN : ACCESS LIST ENTRY NUMBER
STD : SEGMENT TABLE DESIGNATION

# Fig. 12

VMID-REG — VIRTUAL MACHINE IDENTIFIER (bit-0~3)

ALDSO-REG — ACCESS LIST DESIGNATION SOURCE ORIGIN (bit-01~25)

ACCESS LIST ENTRY NUMBER (bit-00~15)

4

25

16

31 OPERATION CIRCUIT

8

32

| V | VMID | ALDSO | ALEN | STD | etc |

33 34 35 36 37 SEL

# Fig. 13

```
    S09∀S10∀S25∀N07∀N08→bit-0
    S08∀S11∀S24∀N06∀N09→bit-1
  M3∀S07∀S12∀S23∀N05∀N10→bit-2
  M2∀S06∀S13∀S22∀N04∀N11→bit-3
  M1∀S05∀S14∀S21∀N03∀N12→bit-4
  M0∀S04∀S15∀S20∀N02∀N13→bit-5
    S03∀S16∀S19∀N01∀N14→bit-6
S01∀S02∀S17∀S18∀N00∀N15→bit-7
```

Fig. 14A

S09 —
S10 —
S25 —
N07 —
N08 —
bit—0

Fig. 14B

S08 —
S11 —
S24 —
N06 —
N09 —
bit—1

Fig. 14C

M3 —
S07 —
S12 —
S23 —
N05 —
N10 —
bit—2

Fig. 14D

M2 —
S06 —
S13 —
S22 —
N04 —
N11 —
bit—3

Fig. 14E

M1
S05
— bit-4
S14
S21
N03
N12

Fig. 14F

M0
S04
— bit-5
S15
S20
N02
N13

Fig. 14G

S03
S16
— bit-6
S19
NO1
N14

Fig. 14H

S01
S02
— bit-7
S17
S18
NOO
N15

# Fig. 15

CPU

I-UNIT
S-UNIT

CACHE-DATA (INSTRUCTION)

VIRTUAL ADDRESS

VMID → TLB → REAL ADDRESS → CACHE ← → MAIN MEMORY

CRs

VMID
ALDSO → ALB → STD
ALEN

SEL

ARs

GRs

STORE-DATA

CACHE-DATA (OPERAND)

E-UNIT

EP 0 484 008 A2